# EUROPEAN PATENT APPLICATION

(11) **EP 2 816 492 A1**
(43) Date of publication of application: **24.12.2014**
(21) Application number: 13857474.4
(22) Date of filing: 26.11.2013
(51) Int. Cl.: G06F 17/30

(54) **LOCATING METHOD AND LOCATING DEVICE**

(30) Priority: 26.11.2012 CN 201210487225
(71) Applicant: Huawei Technologies Co., Ltd., Shenzhen, Guangdong 518129 (CN)
(72) Inventor: SONG, Lei, Shenzhen Guangdong 518129 (CN)
(74) Representative: Thun, Clemens
(86) International application number: PCT/CN2013/087858
(87) International publication number: WO 2014/079397

(57) **Abstract**

Embodiments of the present invention disclose a locating method and a locating apparatus. The method includes: acquiring remark information, where the remark information includes address information and first location information; searching for a web page corresponding to the address information; and locating a target location on the web page according to the first location information, and remarkably displaying the target location on the web page. In the present invention, remark information that includes address information and location information is acquired, and after a web page corresponding to the address information is found, a target location on the web page is located according to the location information, so that locating a specific location on the web page is implemented. This can improve locating precision and enhance user experience.

## Description

This application claims priority to Chinese Patent Application No. 201210487225.5, filed with the Chinese Patent Office on November 26, 2012 and entitled "LOCATING METHOD AND LOCATING APPARATUS", which is incorporated herein by reference in its entirety.

### TECHNICAL FIELD

The present invention relates to the computer field, and in particular, to a locating method and a locating apparatus.

### BACKGROUND

A locating method refers to a method that helps a user quickly find a web page to be browsed among numerous web pages. As the number of web pages increases, the locating method has received growing attention.

At present, a common locating method is to record an address corresponding to a web page. When the web page is browsed next time, the web page is located according to the recorded address, so as to implement locating. However, as content carried on a web page is gradually getting abundant, this method of locating a web page according to an address of the web page cannot satisfy a user's requirement. For example, a web page has 50 lines of texts and a user stops reading when the user reads the 30^{th} line, by using this locating method, only the web page is located when reading is resumed next time.

It can be seen that locating precision of an existing locating method needs to be improved.

### SUMMARY

Embodiments of the present invention provide a locating method and a locating apparatus, which can improve locating precision.

To achieve the foregoing objective, the embodiments of the present invention adopt the following technical solutions:

According to a first aspect, a locating method is provided, including: acquiring remark information, where the remark information includes address information and first location information; searching for a web page corresponding to the address information; and locating a target location on the web page according to the first location information, and remarkably displaying the target location on the web page.

In a first possible implementation manner of the first aspect, where before the acquiring remark information, the method includes: storing location information of the target location as the remark information to a preset storage location.

With reference to the first aspect or with reference to the first possible implementation manner, in a second possible implementation manner, the first location information includes start location information of the target location and end location information of the target location. The locating a target location on the web page according to the location information includes: determining a start point of the target location according to the start location information of the target location; and determining an end point of the target location according to the end location information of the target location.

With reference to the second possible implementation manner, in a third possible implementation manner, the start location information of the target location includes location information, of the start point of the target location, in a body tag pair, and the end location information of the target location includes location information, of the end point of the target location, in the body tag pair.

With reference to the first aspect or any one of the first to third possible implementation manners, in a fourth possible implementation manner, the remark information further includes a user ID and/or recorded information, and the method further includes: displaying the user ID and/or the recorded information on the web page.

According to a second aspect, a locating apparatus is provided, where the apparatus includes: an acquiring unit, configured to acquire remark information, where the remark information includes address information and first location information; a searching unit, configured to search for a web page corresponding to the address information; and a locating unit, configured to locate a target location on the web page according to the first location information, and remarkably display the target location on the web page.

In a first possible implementation manner of the second aspect, the apparatus further includes: a storage unit, configured to store location information of the target location as the remark information to a preset storage location.

With reference to the second aspect or with reference to the first possible implementation manner, in a second possible implementation manner, the first location information includes start location information of the target location and end location information of the target location. The locating unit includes: a first locating subunit, configured to determine a start point of the target location according to the start location information of the target location; and a second locating subunit, configured to determine an end point of the target location according to the end location information of the target location.

With reference to the second possible implementation manner, in a third possible implementation manner, the start location information of the target location includes location information, of the start point of the target location, in a body tag pair, and the end location information of the target location includes location information, of the end point of the target location, in the body tag pair.

With reference to the second aspect or any one of the first to third possible implementation manners, in a fourth possible implementation manner, the remark information acquired by the acquiring unit further includes a user ID and/or recorded information, and the apparatus further includes: a second display unit, configured to display the user ID and/or the recorded information on the web page.

According to a third aspect, a locating apparatus is provided, including: a bus, a processor and a memory connected to the bus, where:

The memory is configured to store an instruction, and the processor executes an instruction in the memory to acquire remark information, where the remark information includes address information and first location information. The processor searches for a web page corresponding to the address information; and locates a target location on the web page according to the first location information, and remarkably displays the target location on the web page.

In a first possible implementation manner of the third aspect, the processor executes an instruction in the memory to store location information of the target location as the remark information to a preset storage location.

In the locating method and the locating apparatus provided by the embodiments of the present invention, remark information that includes address information and location information is acquired, and after a web page corresponding to the address information is found, a target location on the web page is located according to the location information, so that locating a specific location on the web page is implemented. This can improve locating precision and enhance user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a locating method according to Embodiment 1 of the present invention;
FIG. 2 is a flowchart of a locating method according to Embodiment 2 of the present invention;
FIG. 3A is a schematic diagram of a page display according to an embodiment of the present invention;
FIG. 3B is a structural diagram of a source file corresponding to the schematic diagram of the page display shown in FIG. 3A;
FIG. 4 is a schematic structural diagram of a locating apparatus according to Embodiment 3 of the present invention;
FIG. 5 is a schematic structural diagram of another locating apparatus according to Embodiment 3 of the present invention;
FIG. 6 is a schematic structural diagram of still another locating apparatus according to Embodiment 3 of the present invention; and
FIG. 7 is a schematic structural diagram of a locating apparatus according to Embodiment 4 of the present invention.

### DESCRIPTION OF EMBODIMENTS

To make the objectives, technical solutions, and advantages of the present invention clearer, the following further describes the embodiments of the present invention in detail with reference to the accompanying drawings.

### Embodiment 1

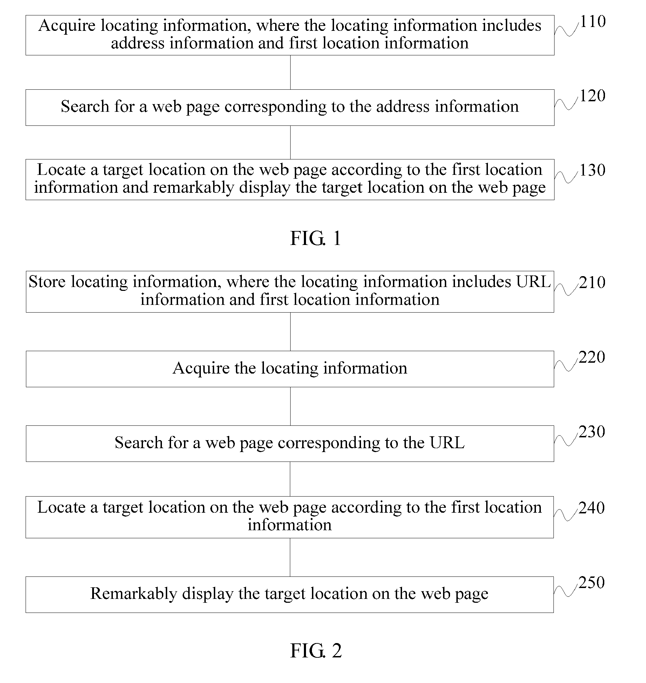

FIG. 1 is a flowchart of a locating method according to this embodiment of the present invention. Referring to FIG. 1, the method may include:

110: Acquire remark information, where the remark information includes address information and first location information.

The address information may be a URL (Uniform/Universal Resource Locator in full name in English, uniform resource locator or web page address in Chinese) of a website, and the first location information may be location information of a target location in step 130.

120: Search for a web page corresponding to the address information.

130: Locate a target location on the web page according to the first location information, and remarkably display the target location on the web page.

Specifically, a locating apparatus (such as a computer) acquires the remark information, where the remark information includes the address information and the first location information, searches for the web page corresponding to the address information, and locates the target location on the web page according to the first location information.

In this embodiment of the present invention, optionally, before the remark information is acquired, the method may further include: storing location information of the target location as the remark information to a preset storage location.

In this embodiment of the present invention, optionally, the first location information includes start location information of the target location and end location information of the target location. In the foregoing step 130, when the target location on the web page is located according to the location information, a start point of the target location may be determined according to the start location information of the target location; and an end point of the target location may be determined according to the end location information of the target location.

In this embodiment of the present invention, further and optionally, the start location information of the target location includes location information, of the start point of the target location, in a body tag pair, and the end location information of the target location includes location information, of the end point of the target location, in the body tag pair.

In this embodiment of the present invention, optionally, the remark information further includes a user ID and/or recorded information, and the method further includes: displaying the user ID and/or the recorded information on the web page.

In this way, remark information that includes address information and location information is acquired, and after a web page corresponding to the address information is found, a target location on the web page is located according to the location information, so that locating a specific location on the web page is implemented. This can improve locating precision and enhance user experience.

### Embodiment 2

As shown in FIG. 2, according to a locating method provided in this embodiment of the present invention, the method may be implemented by using a locating apparatus (such as a computer), and the method may include:

210: Store remark information according to location information of a target location, where the remark information includes URL information and first location information.

Specifically, after it is detected that a remark is made on a web page, remark information is acquired, a URL (address information) carried in the remark information is recorded, a location, of the remark pointed to by the remark information, on the web page corresponding to the URL, that is, the target location, is determined, and a location of a start point of the target location relative to a fixed node (such as a body (tag) node), and a location of an end point of the target location relative to the fixed node (such as the body node) are determined. Location information of the start point of the target location relative to the fixed node (such as the body node) and location information of the end point of the target location relative to the fixed node (such as the body node) are recoded to form the first location information. The fixed node being the body node is used as an example. In a specific implementation, the location information of the start point of the target location relative to the body node and the location information of the end point of the target location relative to the body (tag) node may be recorded by using a format shown in the following Table 1.

Optionally, the first location information may further include a user ID, where the user ID is carried in the remark information and used to distinguish different remark initiators. Optionally, the first location information further includes recorded information, where the recorded information is carried in the remark information and used to record information such as generation time of the remark.

In this embodiment of the present invention, the remark information may be stored in a separate storage device, and may also be stored in a locating apparatus. This embodiment of the present invention sets no limitation thereto.

220: Acquire the remark information.

In this embodiment of the present invention, the remark information may include the URL information (for example, www.xxx.com) and the first location information, where the first location information may be in a format shown in Table 1. The third column in Table 1 is added to help understand meanings and explanations of parameters, and the third column may be omitted in a specific implementation.

**Table 1**

| **No.** | **Location Information of Target Location** | **Parameter Meaning** |
|---|---|---|
| 1 | 1 | First child node under an Html (Hypertext Markup Language in full in English, Hypertext Markup Language in Chinese) body (tag) node |
| 2 | , | Tag pair separator |
| 3 | 2 | Second child node under the first child node of an Html body node |
| 4 | # | Separator between a tag pair and a vector |
| 5 | 11 | Offset vector between a start point of a target location and a tag in which the start point of the target location exists |
| 6 | : | Separator between a start point of a target location and an end point of the target location |
| 7 | 1 | First child node under the Html body node |
| 8 | , | Tag pair separator |
| 9 | 2 | Second child node under the first child node of an Html body node |
| 10 | # | Separator between a tag pair and a vector |
| 11 | 12 | Offset between an end point of a target location and a tag in which the end point of the target location exists |

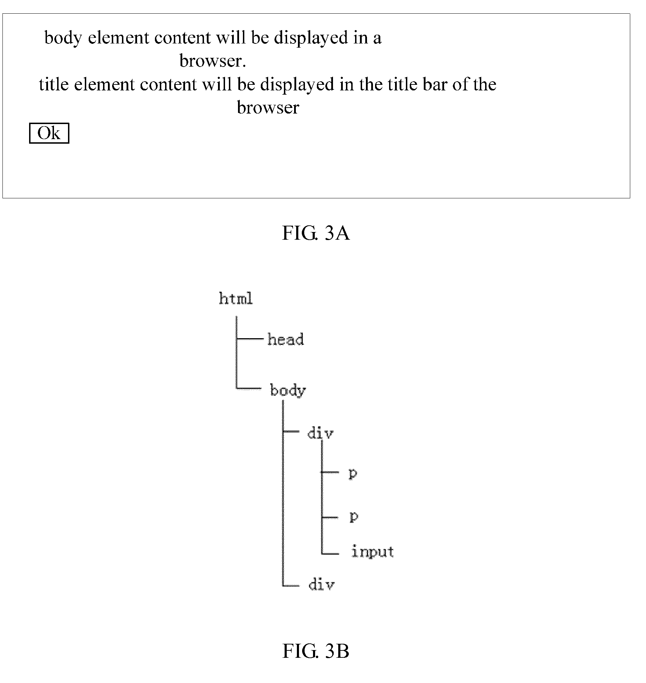

The following describes in detail the meanings of the parameters in Table 1 with reference to an example of a source file of a page. A web page corresponding to the source file is shown in FIG. 3A, and a structure of the source file is shown in FIG. 3B.

```
               <title>My first HTML page</title>
             </head>
             <body>
               <div>
                  <p>body element content will be displayed in a browser.</p>
                  <p>title element content will be displayed in the title bar of the
  browser.</p>
                  <input type="button" value="ok" onclick="alert('ok');"/>
                </div>
                <div>
                </div>
             </body>
          </html>
```

For example, when "displayed in a browser" in the first line and "title" in the second line shown in FIG. 3A are selected, "displayed in a browser title" is a target location, and the first line and the second line, after being mapped to a source file of the page, are "element content is displayed in a browser.</p>···<p>title". Apart of the "element content will be displayed in a browser.</p> <p>title" is in a first HTML <p> tag, and another part is in a second HTML <p> tag. Therefore, the location of the "element content will be displayed in a browser.</p> <p>title" is in an HTML <div> tag (the HTML <div> tag includes two HTML <p> tags). The "<p>body element content is" intersects with the "element content will be displayed in a browser.</p>", and an intersection is a start point of the target location. The "element content will be displayed in a browser.</p> <p>title" intersects with the "element content will be displayed in the title bar of the browser.</p> <input type="button" value="ok" onclick="alert('ok');"/>", and the intersection is an end point of the target location. The "element content will be displayed in a browser.</p> <p>title" is located in the HTML <div> tag, that is, a tag pair. The HTML <div> tag is located in the HTML <body> tag, and the HTML <body> tag is a parent tag pair of the HTML <div> tag.

230: Search for a web page corresponding to the URL.

Specifically, searching for the web page by using the URL may be implemented by using the prior art, and details are not described herein again.

240: Locate the target location of the web page according to the first location information.

Specifically, the start point of the target location may be determined according to the start location information of the target location recorded in Table 1; and the end point of the target location may be determined according to the end location information of the target location. Further, as shown in Table 1, the start location information of the target location includes the location information of the start point of the target location relative to the body, and the end location information of the target location includes the location information of the end point of the target location relative to the body.

For example, the target location is located by using information about the target location recorded in Table 1.

250: Remarkably display the target location on the web page.

"Remarkably display" herein includes but is not limited to highlighted display, bold display, and display in a floating layer manner. This embodiment of the present invention sets no limitation thereto.

In this embodiment of the present invention, the remark information further includes a user ID and/or recorded information; then, after the locating the target location on the web page according to the first location information, the method may further include:
displaying the user ID and/or the recorded information included in the remark information, on the web page.

Preferably, the user ID and/or the recorded information may be displayed at the same time when the target location is remarkably displayed.

It should be understood that the user ID and/or the recorded information include three cases: the user ID, the recorded information, and the user ID and the recorded information.

In this embodiment of the present invention, optionally, after the first location information is stored, the method may further include:
receiving a deletion request, where the deletion request carries ID of the location information; and deleting the location information according to the ID of the location information.

In a method in this embodiment of the present invention, remark information that includes address information and location information is acquired, and after a web page corresponding to the address information is found, a target location on the web page is located according to the location information, so that locating and remarkably displaying a specific location on the web page are implemented. This can improve locating precision and enhance user experience.

### Embodiment 3

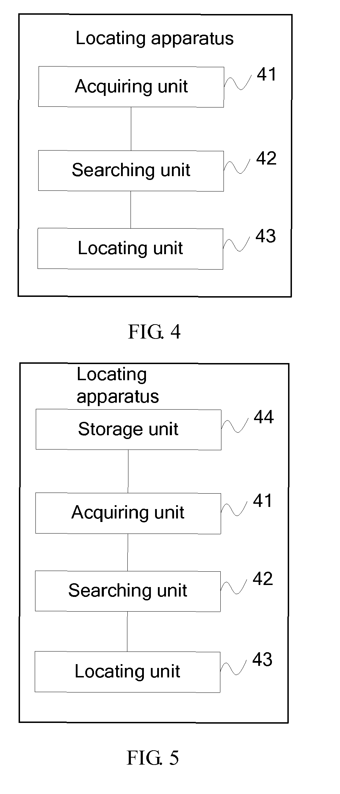

As shown in FIG. 4, according to a locating apparatus provided in this embodiment of the present invention, the apparatus may include: an acquiring unit 41, a searching unit 42, and a locating unit 43.

The acquiring unit 41 is configured to acquire remark information, where the remark information includes address information and first location information.

The searching unit 42 is configured to search for a web page corresponding to the address information.

The locating unit 43 is configured to locate a target location on the web page according to the first location information, and remarkably display the target location on the web page.

Preferably, as shown in FIG. 5, the apparatus may further include a storage unit 44, which is configured to store location information of the target location as the remark information to a preset storage location.

In this embodiment of the present invention, the remark information may be stored in a separate storage device, and may also be stored in the locating apparatus. This embodiment of the present invention sets no limitation thereto.

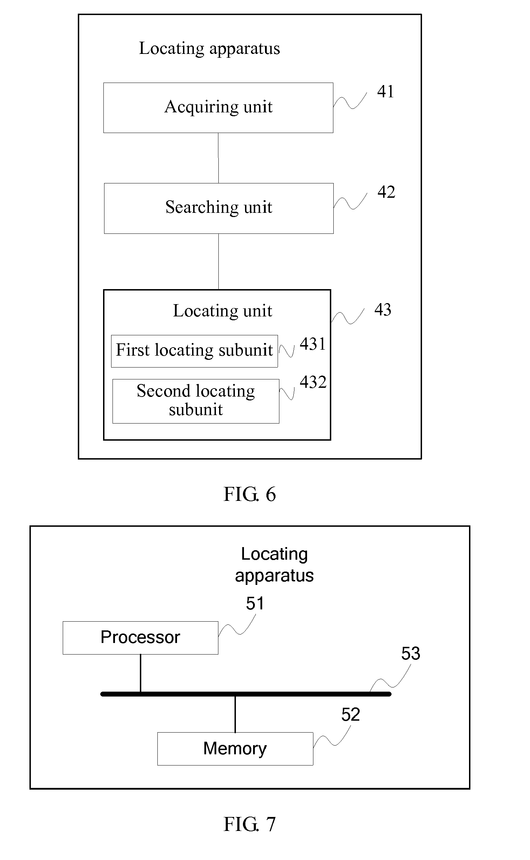

Preferably, as shown in FIG. 6, the first location information in the acquiring unit 41 may include start location information of the target location and end location information of the target location, and the locating unit 43 includes:
a first locating subunit 431, configured to determine a start point of the target location according to the start location information of the target location; and
a second locating subunit 432, configured to determine an end point of the target location according to the end location information of the target location.

Preferably, the start location information of the target location includes location information, of the start point of the target location, in a body tag pair and the end location information of the target location includes location information, of the end point of the target location, in the body tag pair.

Preferably, the remark information acquired by the acquiring unit 41 further includes a user ID and/or recorded information, and the locating unit 43 is configured to display the user ID and/or the recorded information on the web page.

In the locating apparatus according to this embodiment of the present invention, for a function of each unit, refer to relevant descriptions in the foregoing method embodiments.

In a locating apparatus in this embodiment of the present invention, remark information that includes address information and location information is acquired, and after a web page corresponding to the address information is found, a target location on the web page is located according to the location information, so that locating and remarkably displaying a specific location on the web page are implemented. This can improve locating precision and enhance user experience.

### Embodiment 4

As shown in FIG. 7, according to a locating apparatus provided in this embodiment of the present invention, the apparatus may include: a bus 53, a processor 51 connected to the bus 53, and a memory 52.

The memory 52 is configured to store an instruction, and the processor 51 executes an instruction in the memory 52 to acquire remark information, where the remark information includes address information and first location information; the processor searches for a web page corresponding to the address information; and locates a target location on the web page according to the first location information, and remarkably displays the target location on the web page.

Preferably, the processor 51 executes an instruction in the memory 52 to store location information of the target location as the remark information to a preset storage location.

In this embodiment of the present invention, the remark information may be stored in a separate storage device, and may also be stored in the locating apparatus. This embodiment of the present invention sets no limitation thereto.

Preferably, the first location information includes start location information of the target location and end location information of the target location. The processor 51 executes an instruction in the memory 52 to determine a start point of the target location according to the start location information of the target location, and determine an end point of the target location according to the end location information of the target location.

Preferably, the processor 51 executes an instruction in the memory 52 to remarkably display the target location on the web page.

Preferably, the remark information further includes a user ID and/or recorded information, and the processor 51 executes an instruction of the memory 52 to display the user ID and/or the recorded information on the web page.

In a locating apparatus according to this embodiment of the present invention, remark information that includes address information and location information is acquired, and after a web page corresponding to the address information is found, a target location on the web page is located according to the location information, so that locating and remarkably displaying a specific location on the web page are implemented. This can improve locating precision and enhance user experience.

It should be noted that, when locating is performed by a locating apparatus provided in embodiments of the present invention, division of functional units is merely used as an example, and the foregoing functions may be assigned to different functional units or modules according to an actual need in actual application, that is, an internal structure of the device is divided into different functional units, to complete all or a part of the functions described above. Moreover, the locating apparatus provided in the embodiments of the present invention are based on the idea of the locating method embodiment. For a detailed implementation process, reference may be made to the locating method embodiment, and details are not described herein again.

The sequence numbers of the foregoing embodiments of the present invention are merely for illustrative purposes, and are not intended to indicate priorities of the embodiments.

A person of ordinary skill in the art may understand that all or a part of the steps of the embodiments may be implemented by hardware or a program instructing relevant hardware. The program may be stored in a computer readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, or improvement made without departing from the spirit and principle of the present invention should fall within the protection scope of the present invention.

## Claims

1. A locating method, comprising:
acquiring remark information, wherein the remark information comprises address information and first location information;
searching for a web page corresponding to the address information; and
locating a target location on the web page according to the first location information, and remarkably displaying the target location on the web page.

2. The method according to claim 1, wherein before the acquiring remark information, the method comprises: storing location information of the target location as the remark information to a preset storage location.

3. The method according to claim 1 or 2, wherein the first location information comprises start location information of the target location and end location information of the target location, and the locating a target location on the web page according to the location information comprises:
determining a start point of the target location according to the start location information of the target location; and
determining an end point of the target location according to the end location information of the target location.

4. The method according to claim 3, wherein the start location information of the target location comprises location information, of the start point of the target location, in a body tag pair, and the end location information of the target location comprises location information, of the end point of the target location, in the body tag pair.

5. The method according to any one of claims 1 to 4, wherein the remark information further comprises a user ID and/or recorded information, and the method further comprises: displaying the user ID and/or the recorded information on the web page.

6. A locating apparatus, comprising:
an acquiring unit, configured to acquire remark information, wherein the remark information comprises address information and first location information;
a searching unit, configured to search for a web page corresponding to the address information; and
a locating unit, configured to locate a target location on the web page according to the first location information, and remarkably display the target location on the web page.

7. The apparatus according to claim 6, further comprising: a storage unit, configured to store location information of the target location as the remark information to a preset storage location.

8. The apparatus according to claim 6 or 7, wherein the first location information comprises start location information of the target location and end location information of the target location, and the locating unit comprises:
a first locating subunit, configured to determine a start point of the target location according to the start location information of the target location; and
a second locating subunit, configured to determine an end point of the target location according to the end location information of the target location.

9. The apparatus according to claim 8, wherein the start location information of the target location comprises location information, of the start point of the target location, in a body tag pair, and the end location information of the target location comprises location information, of the end point of the target location, in the body tag pair.

10. The apparatus according to any one of claims 6 to 9, wherein the remark information further comprises a user ID and/or recorded information, and the locating unit is further configured to display the user ID and/or the recorded information on the web page.
